# EUROPÄISCHE PATENTSCHRIFT

(11) **EP 0 695 654 B1**
(45) Veröffentlichungstag und Bekanntmachung des Hinweises auf die Patenterteilung: **13.05.1998**
(21) Anmeldenummer: 95110059.3
(22) Anmeldetag: 28.06.1995
(51) Int. Cl.: B60D 1/06

(54) **Kugelkopf-Anhängerkupplung**
Ball trailer hitch
Attelage de remorque à rotule

(30) Priorität: 03.08.1994 DE 9412514 U
(43) Veröffentlichungstag der Anmeldung: 07.02.1996
(73) Patentinhaber: AL-KO KOBER AG, D-89359 Kötz (DE)
(72) Erfinder: Pfaudler, Volker, D-89349 Burtenbach (DE); Wöhrle, Rudolf, D-89335 Ichenhausen (DE)
(74) Vertreter: Ernicke, Hans-Dieter, Dipl.-Ing.

(56) Entgegenhaltungen:
- EP-A- 0 483 926
- GB-A- 2 006 143
- GB-A- 2 056 929
- GB-A- 2 083 426

## Beschreibung

Die Erfindung betrifft eine Kugelkopf-Anhängerkupplung mit den Merkmalen im Oberbegriff des Hauptanspruches.

Eine solche Kugelkopf-Anhängerkupplung ist aus der GB-A-2 083 426 bekannt. Sie weist einen Kupplungsgriff und ein getrennt angeordnetes Sperrteil auf, das auf eine Kupplungsschale einwirkt, mit der der Kugelkopf des Zugfahrzeuges im Kupplungsgehäuse arretiert wird. Der Kupplungsgriff und das Sperrteil sind über getrennte Achsen im Kupplungsgehäuse drehbar gelagert, wobei der Kupplungsgriff über eine Kulissenführung zusätzlich verschiebbar angeordnet ist. Der Kupplungsgriff und das Sperrteil sind über einen Bolzen drehbar miteinander gekoppelt und stehen in einer permanenten Mitnahmeverbindung. Der Kupplungsgriff macht dadurch alle Bewegungen des Sperrteils mit. Diese Anordnung hat den Nachteil, daß der zwischen Kupplungsschale und Sperrteil entstehende Verschleiß sich auf die Stellung des Kupplungsgriffs unmittelbar auswirkt. Der Kupplungsgriff unterliegt jedoch Vorschriften über die Größe der freizuhaltenden Bauräume, in der er bei Einnahme seiner Öffnungs- und Schließstellung nicht hineinragen darf. Für die Schließstellung ist daher ein verschleißbedingter Vorhalt einzukalkulieren, der wiederum durch den festgelegten Öffnungswinkel des Kupplungsgriffes zu einem Überschreiten des zulässigen Bauraumes für die Öffnungsstellung führt. Als Sekundärsicherung gegen ein unbeabsichtiges Öffnen der Kupplung bzw. ein Versagen des Sperrteils ist eine Feder am Kupplungsgriff vorgesehen, die diesen in der Schließstellung festhält und an einer Raste in der Kulissenführung anlegt.
In einer zweiten Variante, wie sie beispielsweise in der EP-A-0 483 926 oder in der DE-U-88 15 526 beschrieben ist, ist der Kupplungsgriff über einen Bolzen schwenkbar am Sperrteil gelagert. Diese Anordnung bringt gewisse Verbesserungen bei der Einhaltung der Bauräume, wobei die Griffstellung aber noch vom Sperrteilverschleiß beeinflußt bleibt. Außerdem ist die Kinematik der Griffbewegungen nicht günstig. Als Sekundärsicherung ist in der EP-A-0 483 926 eine Totpunktfeder am Kupplungsgriff vorgesehen, die diesen in Schließverbindung mit dem Sperrteil halten soll. Die DE-U-88 15 526 besitzt als Sekundärsicherung eine Anschlagnase am Kupplungsgriff, die ein Herausrutschen des Kupplungsgriffes aus dem Kupplungsgehäuse bei einem Versagen des Sperrteils verhindert. Die Sperrnase wird jedoch erst nach einem gewissen Weg des Kupplungsgriffs wirksam.

Weitere Kupplungen sind aus der DE-B-21 05 668, DE-C-39 29 752, DE-U-76 07 711, DE-C-676 690 und DE-AN R 16191 Ü/63c bekannt.

Andere Kugelkopf-Anhängerkupplungen sind aus der Praxis in verschiedenen Ausführungsformen bekannt. Sie weisen jeweils einen Kupplungsgriff auf, der einteilig mit dem Sperrteil ausgebildet und drehbar im Kupplungsgehäuse gelagert ist. Diese Anordnung ist noch stärker verschleißabhängig. Außerdem bedingt diese bekannte Konstruktion eine besondere Federhebelkonstruktion als Sekundärsicherung gegen ein unbeabsichtigtes Öffnen der Kupplung, wenn das Sperrteil bricht oder anderweitig ausfällt. Der Federhebel wird ebenfalls erst nach einem gewissen Weg des Kupplungsgriffs wirksam.

Es ist Aufgabe der vorliegenden Erfindung, eine Kugelkopf-Anhängerkupplung mit einem Kupplungsgriff aufzuzeigen, die den Erfordernissen besser gerecht wird.

Die Erfindung löst diese Aufgabe mit den Merkmalen in Hauptanspruch.
Bei der erfindungsgemäßen Kugelkopf-Anhängerkupplung wirkt sich der Verschleiß des Sperrteils nicht mehr auf den Kupplungsgriff aus. Durch die getrennte Lagerung und die einseitige Mitnahmeverbindung kommt der Kupplungsgriff zum Öffnen der Anhängerkupplung in direkten Kontakt mit dem Sperrteil und nimmt es mit. Danach kann der Kupplungsgriff in seine Ausgangsstellung zurückkehren, während das Sperrteil sich unabhängig bewegen und den Verschleiß an seiner Berührungsfläche mit der Kupplungsschale sowie den Kugelverschleiß kompensieren kann.

Bei der erfindungsgemäßen Kugelkopf-Anhängerkupplung sind der Kupplungsgriff und das Sperrteil zwar getrennt voneinander, aber gleichachsig gelagert. Die Anordnung ist kinematisch günstig und erlaubt eine sichere Einhaltung der vorgegebenen Bauräume. Der Bauaufwand und Platzbedarf sind geringer als beim Stand der Technik, während andererseits der zulässige Schwenkwinkel und die Verschleißaufnahmefähigkeit größer sind.

Günstig wirkt sich aus, daß der Kupplungsgriff und das Sperrteil beim Öffnen gleichsinnig drehen. Gleichläufig ist auch die Drehung von Sperrteil und Kupplungsschale beim Schließen. In beiden Fällen ergeben sich kinematisch vorteilhafte Mitnahme- und Stellwirkungen.

Die erfindungsgemäße Anhängerkupplung hat im weiteren den Vorteil, daß die Sekundärsicherung direkt auf die Kupplungsschale einwirkt. Sie ist einfacher, weniger toleranzabhängig und besser wirksam als vorbekannte Konstruktionen. Sie wird von einer oder zwei Armverlängerungen des Kupplungsgriffs gebildet, die bis knapp an die Kupplungsschale heranreichen. Bei einen Versagen des Sperrteiles kann die Sekundärsicherung sofort in Funktion treten, wobei die Kupplungsschale an den Armverlängerungen anschlägt. Diese Sicherungsausbildung wird durch die Gleichachsigkeit von Kupplungsgriff und Sperrteil begünstigt.

Der Kupplungsgriff läßt sich mit der erfindungsgemäßen Gestaltung zuden leichter und besser handhaben. Durch seine Lagerung an einer gehäusefesten Achse können die Handkräfte besser ausgenutzt werden.

Die erfindungsgemäße Kupplungsgestaltung ermöglicht die Anordnung einer Verschleißanzeige, die den zwischen Sperrteil und Kupplungsschale und/oder zwischen Kugelkopf und Kupplungsschale entstehenden Verschleiß direkt signalisiert.

Die erfindungsgemäße Anhängerkupplung bietet zudem die Möglichkeit, die Kupplungsschale in Öffnungsstellung mit einer geeigneten Rastanordnung zu arretieren. Diese Öffnungs- oder Raststellung läßt sich im Gegensatz zu vorbekannten Konstruktionen nicht nur beim Aufsetzen auf den Kugelkopf, sondern auch von Hand durch den Kupplungsgriff lösen. Dies ermöglicht auf der anderen Seite eine funktionsverbesserte Anordnung und Verwendung eines Sicherungsstiftes. Dieser läßt sich nur bei geschlossener Anhängerkupplung einsetzen, nicht aber bei geöffneter bzw. über die Raststellung arretierter Kupplung. Durch die manuelle Lösbarkeit der Raststellung läßt sich der Sicherungsstift bei der erfindungsgemäßen Anhängerkupplung auch bei abgekuppeltem Anhänger einsetzen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1: eine Kugelkopf-Anhängerkupplung im Längsschnitt und in Schließstellung,
- Fig. 2: eine Draufsicht auf die Anhängerkupplung gemäß Pfeil II von Fig. 1,
- Fig. 3 u. 4: einen Kupplungsgriff in Seiten- und Stirnansicht,
- Fig. 5: ein Sperrteil in Seitenansicht,
- Fig. 6 u. 7.: Kupplungsgriff und Sperrteil nebst Verschleißanzeige in Seitenansicht und verschiedenen Betriebsstellungen und
- Fig. 8: die Anhängerkupplung in arretierter Öffnungsstellung und in Längsschnitt.

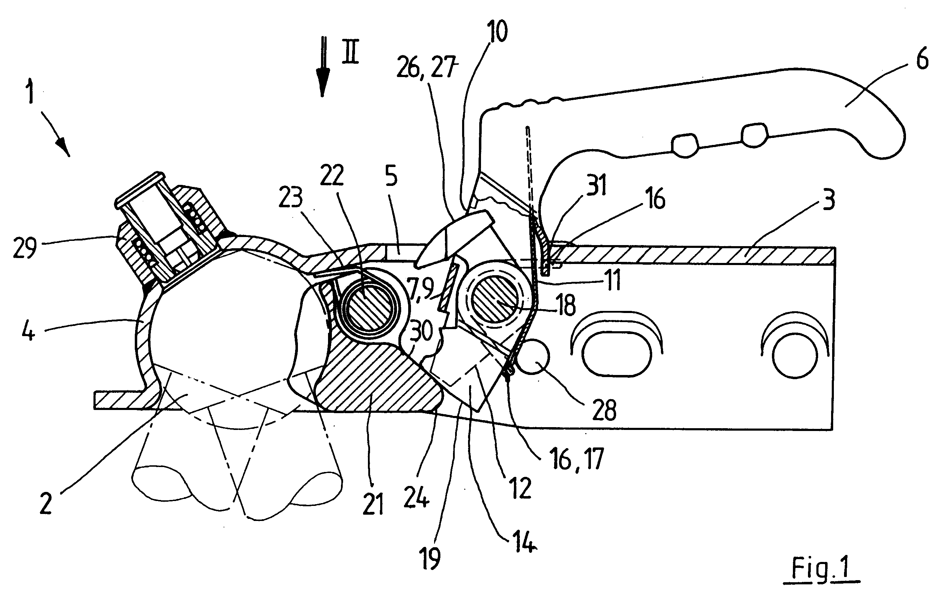

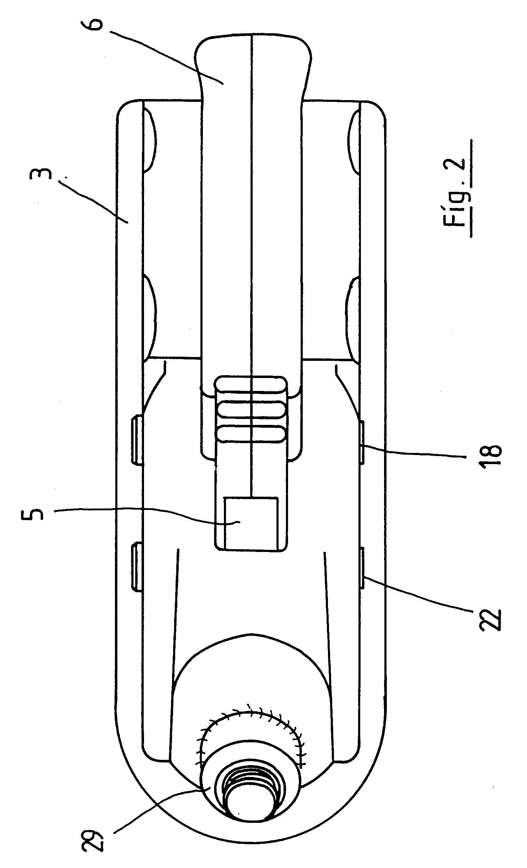

Fig. 1 bis 8 zeigen eine Kugelkopf-Anhängerkupplung (1) zur Verbindung von Anhängern mit Zugfahrzeugen (beide nicht dargestellt), die mit einem Kugelkopf (2) ausgerüstet sind. Bei den Fahrzeuganhängern handelt es sich z.B. um ein- oder mehrachsige Anhänger mit starrer Deichsel, wie Wohnwagen, Pritschenanhänger etc..

Die Anhängerkupplung (1) besitzt ein Kupplungsgehäuse (3) mit einer im wesentlichen halbkugelförmigen Kalotte (4), die auf den Kugelkopf (2) aufgesetzt wird. Zum Festspannen des Kugelkopfes (2) ist eine Kupplungsschale (21) vorgesehen, die drehbar über eine Achse (22) im Kupplungsgehäuse (3) gelagert ist und mittels einer Feder (23) in Öffnungsstellung gedrückt wird.

Die Kupplungsschale (21) wird durch einen Kupplungsgriff (6) mit einem Sperrteil (14) betätigt und an den Kugelkopf (2) angepreßt. Der Kupplungsgriff (6) und das Sperrteil (14) sind als separate Bauteile ausgebildet, getrennt voneinander angeordnet und unabhängig voneinander drehbar gelagert. Im bevorzugten Ausführungsbeispiel sind beide nebeneinander auf einer gehäusefesten Achse (18) gelagert.

Der Kupplungsgriff (6) und das Sperrteil (14) stehen in einer einseitigen Mitnahmeverbindung (7) zueinander. Der Kupplungsgriff (6) weist dazu einen Mitnehmer (9) auf, der auf eine Mitnahmekante (15) am Sperrteil (14) einwirkt und dieses beim Anheben des Kupplungsgriffes (6) und beim Öffnen der Anhängerkupplung (1) mitnimmt. Der Kupplungsgriff (6) und das Sperrteil (14) drehen dabei gleichsinnig. Das Sperrteil (14) bewegt sich beim Öffnen im Kupplungsgehäuse (3) in den freien Raum nach hinten und vom Kugelkopf (2) bzw. der Kupplungsschale (21) weg.

Der Mitnehmer (9) wird von der Unterkante einer Frontplatte am Griffgehäuse gebildet und drückt von oben auf die stufenförmig vorspringende Mitnahmekante (15). Die Mitnahme ist im wesentlichen verschleißfrei. Das Sperrteil (14) wird dabei nach hinten geschwenkt und gerät außer Kontakt mit der Kupplungsschale (21). Die Kupplungsschale (21) kann sich dann unter der Wirkung der Feder (23) zurückdrehen und den Kugelkopf (2) freigeben.

Zum Schließen der Anhängerkupplung (1) drückt das Sperrteil (14) mit seiner stirnseitigen Druckfläche (19) auf eine obenliegende Anlauffläche (30) auf der Kupplungsschale (21). Die Druckfläche (19) ist als selbsthemmende Kurvenbahn ausgeführt und in Abstimmung mit der Anlauffläche (30) so gekrümmt, daß die rückstellende Kraft der Kupplungsschale (21) in der Resultierenden stets vor der Achse (18) verläuft und das Sperrteil (14) in Schließstellung zwingt.

Das Sperrteil (14) wird von einer Spannfeder (16) in Schließstellung und zur Kupplungsschale (21) hin gezwungen. Die Spannfeder (16) ist als doppelte Torsionsfeder ausgebildet und hintergreift mit einem Bügelarm (17) das Sperrteil (14). Die Windungen der Torsionsfeder sind beidseits des Sperrteils (14) auf der Achse (18) gelagert. Endseitig stützt sich die Spannfeder (16) an der Oberseite des Kupplungsgehäuses (3) ab.

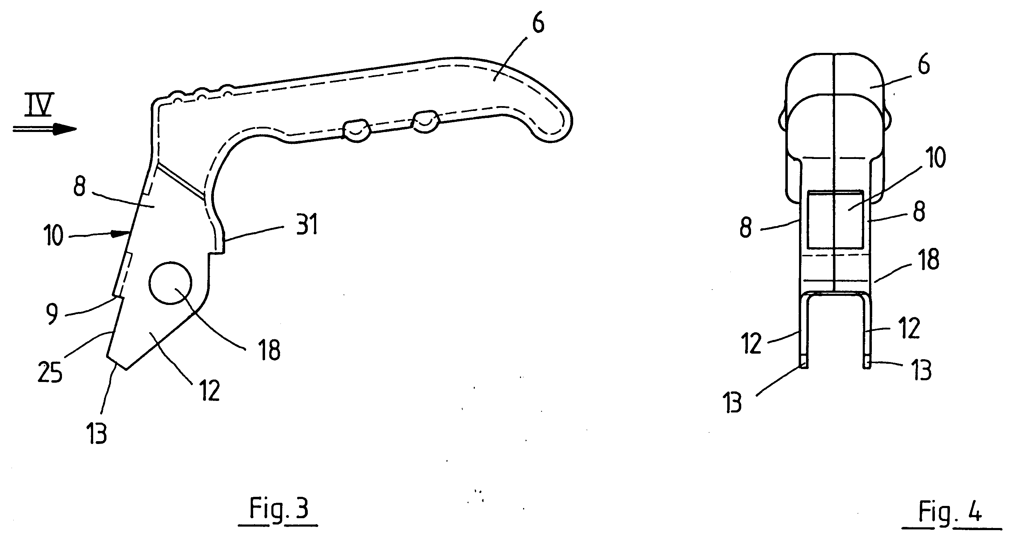

Der Kupplungsgriff (6) ragt durch eine Gehäuseöffnung (5) in das Innere des Kupplungsgehäuses (3). Fig. 3 und 4 verdeutlichen die Griffausbildung im einzelnen. Im unteren Teil ist der schräg abgewinkelte Kupplungsgriff (6) hohl ausgebildet und besteht aus zwei parallelen Gabelarmen (8), die das Sperrteil (14) zwischen sich aufnehmen und seitlich umgreifen. Mit den Gabelarmen (8) ist der Kupplungsgriff (6) auf der Achse (18) frei drehbar gelagert. Die Gabelarme (8) setzten sich jenseits der Achse (18) in jeweils eine Armverlängerung (12) fort, die sich längs des Sperrteils (14) erstreckt.

Die Armverlängerungen (12) reichen bis zur Kupplungsschale (21) und enden mit geringem Abstand oberhalb der Anlauffläche (30). Dieser Abstand ist etwas größer als der Weg, um den die Kupplungsschale (21) bei dem maximal zulässigen Verschleiß nach oben schwenken kann. Die Armverlängerungen (12) befinden sich außer beim Öffnen der Kupplung (1) stets über der Kupplungsschale (21). Sie bilden die Sekundärsicherung der Anhängerkupplung (1), falls das Sperrteil (14) durch Bruch oder auf andere Weise ausfällt und die Kupplungsschale (21) nicht mehr in Schließstellung halten kann. Die Kupplungsschale (21) schlägt dann an den Armverlängerungen (12) an, die an der Unterseite ebenfalls eine selbsthemmende Anschlagfläche (13) aufweisen. Deren Bahnkrümmung ist so gewählt, daß der Kupplungsgriff (6) von der Kupplungsschale (21) im Sicherungsfall in Schließstellung gedrückt wird und ein Öffnen der Anhängerkupplung (1) verhindert.

Der Kupplungsgriff (6) wird durch Eigengewicht in die in Fig. 1 gezeigte Schließstellung gedrückt. Dabei schlägt er mit seiner Rückseite am hinteren Rand der Gehäuseöffnung (5) an. Der Kupplungsgriff (6) hat an dieser Stelle eine definierte vertikale Anschlagkante (31).

Die Rückstellbewegung kann zusätzlich unterstützt werden durch eine Blattfeder (11), die unter dem Bügelarm (17) der Spannfeder (16) eingehängt ist und an der Rückseite des Sperrteils (14) entlang nach oben bis in den Kupplungsgriff (6) ragt. In Höhe der Achse (18) wird die Blattfeder (11) gebogen und kommt mit ihrer Rückseite an der Griffkrümmung zur Anlage. Mit der Blattfeder (11) können auch Schwingungen des Kupplungsgriffs (6) unterdrückt werden.

Durch die getrennte Anordnung und Beweglichkeit von Kupplungsgriff (6) und Sperrteil (14) sowie die einseitige Mitnahmeverbindung (7) können beide Teile optimal an ihre jeweiligen funktionalen Erfordernisse angepaßt werden. Das Sperrteil (14) kann sich unter Einwirkung der Spannfeder (16) unabhängig von Kupplungsgriff (6) drehen und auf die Kupplungsschale (21) einwirken. Dabei wird der zwischen der Druckfläche (19) und der Anlauffläche (30) der Kupplungsschale (21) auftretende Verschleiß, wie auch der Verschleiß zwischen Kugelkopf (2) und Kupplungsschale (21) aufgenommen. Das Sperrteil (14) wird unter Federkraft dazu entsprechend nachgedreht.

Der Kupplungsgriff (6) kann auf die Einhaltung der Bauräume optimiert werden. Für die Öffnungsbewegung gibt es einen sogenannten Bauraum "A", der eine bestimmte Schrägstellung des Kupplungsgriffes (6) zuläßt. Für die Schließstellung gibt es einen sogenannten Bauraum "B", der den für die Hand freizuhaltenden Raum zwischen dem Kupplungsgriff (6) und dem Kupplungsgehäuse (3) definiert.

Durch die einseitige Nitnahmeverbindung (7) kann der Kupplungsgriff (6) bei geschlossener Anhängerkupplung (1) stets in die in Fig. 1 gezeigte Ausgangslage zurückkehren. Diese Griffstellung ist unabhängig von der Drehstellung des Sperrteils (14). Durch den Anschlag an der Gehäuseöffnung (5) ist die Griffstellung und damit die Einhaltung des Bauraums "B" genau definiert.

Bei der Öffnungsbewegung kommt der Mitnehmer (9) in Kontakt mit der Mitnahmekante (15) des Sperrteils (14). Die Maße sind so aufeinander abgestimmt, daß der Bauraum "A" unabhängig vom Verschleiß und der Sperrteilstellung eingehalten und die Anhängerkupplung (1) sicher geöffnet werden kann. Der Kupplungsgriff (6) hat zum Öffnen der Anhängerkupplung (1) immer den gleichen Drehweg. Er kommt nur je nach Verschleiß am Kugelkopf (2) früher oder später mit den Sperrteil (14) in Mitnahmekontakt. Zwischen Mitnehmer (9) und Mitnahmekante (15) besteht jedoch kein Verschleiß, so daß der Drehweg insoweit unbeeinflußt ist.

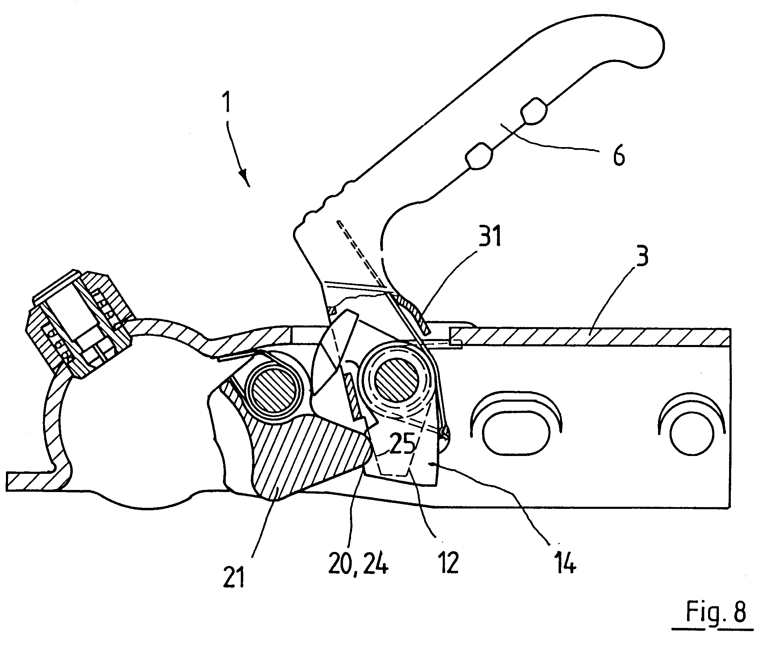

Die Anhängerkupplung (1) kann in Öffnungsstellung arretiert werden. Hierzu weist das Sperrteil (14) an der Vorderseite eine rinnenförmige Rastöffnung (20) auf, die mit einer rückwärtigen Rastnase (24) an der Kupplungsschale (21) zusammenwirkt. Fig. 8 verdeutlicht die Raststellung. In Raststellung bleibt auch der Kupplungsgriff (6) geöffnet und liegt mit seinen Armverlängerungen (12) an der Rastnase (24) an.

Die Raststellung wird durch den Eintritt des Kugelkopfes (2) selbsttätig gelöst. Der Kugelkopf (2) drückt auf den oberen Rand der Kupplungsschale (21) und dreht diese in Schließstellung. Dabei kommt die Rastnase (24) außer Eingriff mit der Rastöffnung (20) und läßt auch ein Rückschwenken des Kupplungsgriffes (6) in die Ausgangsstellung von Fig. 1 zu.

Die Raststellung kann auch manuell über den Kupplungsgriff (6) gelöst werden. Die mit der Rastnase (24) in Kontakt tretende Vorderkante der Armverlängerungen (12) ist als Anlaufkante (25) ausgebildet. Sie ist so geneigt, daß die Kupplungsschale (21) bei einer abwärtsgerichteten Schwenkbewegung des Kupplungsgriffes (6) gedreht wird, aus der Raststellung schnappt und in die Schließstellung gedrückt wird. Das Sperrteil (14) gleitet dann seinerseits automatisch unter Einwirkung der Spannfeder (16) auf die Anlauffläche (30) der Kupplungsschale (21).

Die Anhängerkupplung (1) besitzt eine Verschleißanzeige (26). Sie signalisiert die gegenseitige Drehstellung zwischen dem Sperrteil (14) und der Kupplungsschale (21) und damit den zwischen diesen beiden Teilen und den am Kugelkopf (2) auftretenden Verschleiß. Je größer der Verschleiß ist, desto weiter dreht das Sperrteil (14) über die Kupplungsschale (21).

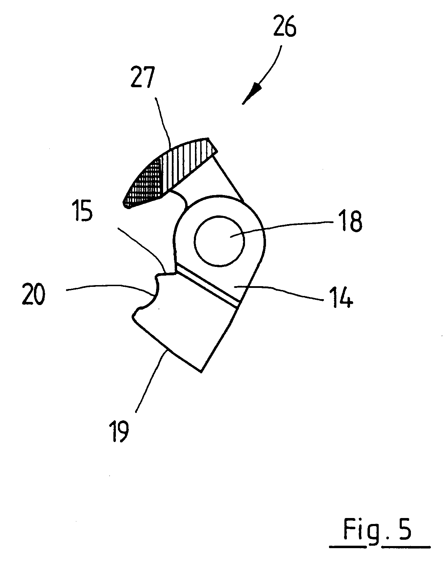

Die Verschleißanzeige (26) ist mit dem Sperrteil (14) verbunden. Fig. 5 bis 7 zeigen die Details. Sie besteht aus einem Signalkopf (27), der oberhalb der Achse (18) angeordnet ist und über einen Ansatz mit dem Sperrteil (14) verbunden ist. Der Signalkopf (27) ragt durch ein Fenster (10) in der Vorderseite des Kupplungsgriffs (6) nach außen. Er signalisiert durch seine Stellung gegenüber dem Kupplungsgriff (6) den Verschleiß.

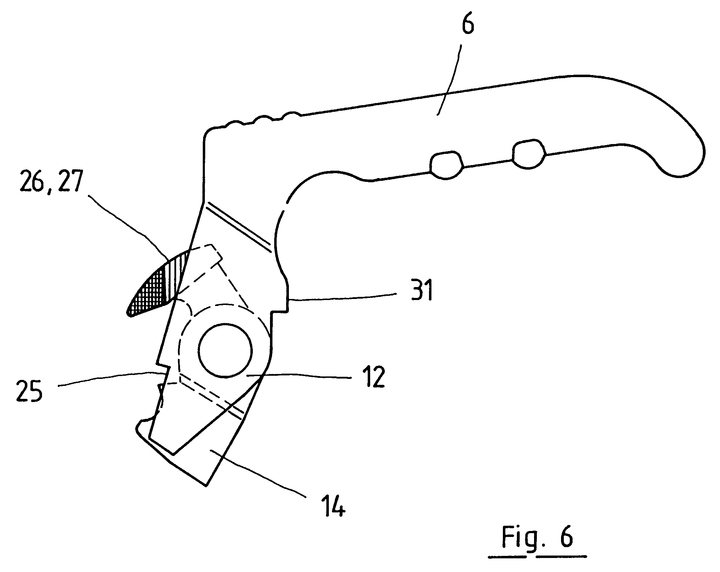

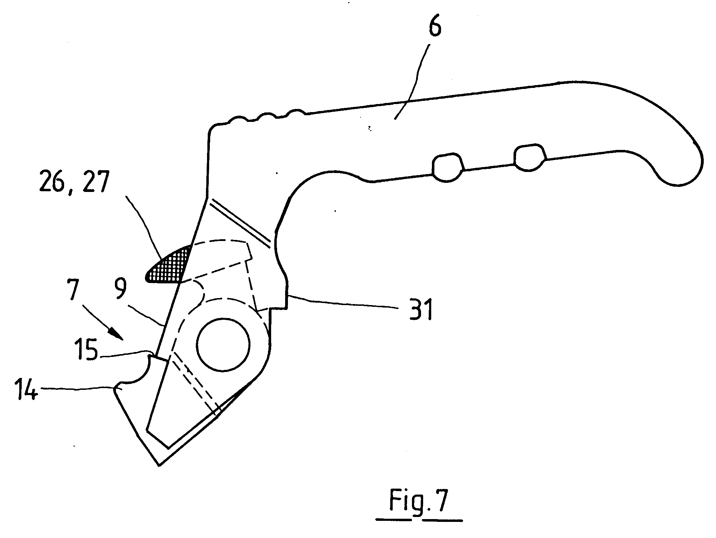

Hierzu weist der Signalkopf (27) beispielsweise zwei verschiedenfarbige Bereiche auf, die in den Zeichnungen durch unterschiedliche Schraffur verdeutlicht sind. Der hintere Bereich ist beispielsweise grün. Je größer der Verschleiß ist, desto weiter tritt der Signalkopf (27) in das Innere des Kupplungsgriffs (6). Wenn nur noch der vordere, rote Bereich zu sehen ist, ist die maximal zulässige Verschleißgrenze erreicht. Fig. 6 zeigt die Stellung ohne Verschleiß und Fig. 7 die Stellung mit viel Verschleiß. Hieraus ist auch die entsprechende Drehstellung des Sperrteils (14) ersichtlich.

Die Anhängerkupplung (1) besitzt ferner eine Sicherungsvorrichtung mit einen quer durch das Kupplungsgehäuse (3) steckbaren Sicherungsstift (28). Der Sicherungsstift (28) bzw. die zugehörigen Gehäuseöffnungen sind so angeordnet, daß der Stift das Sperrteil (14) und die Armverlängerungen (12) in Schließstellung der Kupplung (1) hintergreift. Dieser Hintergriff ist nur in Schließstellung möglich. Ist die Anhängerkupplung (1) geöffnet oder auch in der in Fig. 8 gezeigten Stellung arretiert, werden die Gehäuseöffnungen von den Armverlängerungen (12) zumindest teilweise überdeckt, so daß der Sicherungsstift (28) nicht eingeführt werden kann. Die Anhängerkupplung (1) muß dann erst geschlossen werden, um anschließend gesichert werden zu können.

Die Anhängerkupplung (1) kann noch weitere Bauteile aufweisen. In den Zeichnungen ist beispielsweise eine Einrastanzeige (29) an der Kalotte (4) dargestellt. Außerdem kann eine Reibkupplung (nicht dargestellt) vorhanden sein, die mittels federnd angepreßter Reibstößel die vom Anhänger eingeleiteten Schwingungen dämpft.

Abwandlungen des gezeigten Ausführungsbeispiels sind in verschiedener Weise möglich. Zum einen kann die Mitnahmeverbindung (7) anders ausgebildet sein, indem z. B. der Kupplungsgriff (6) mit einer entsprechenden Platte das Sperrteil (14) übergreift und von vorne auf das Sperrteil (14) drückt. Das Sperrteil (14) kann auch an der Rückseite über eine geeignete Verbindung am Kupplungsgriff (6) angehängt sein und wird von diesen gezogen statt gedrückt. Ferner können der Kupplungsgriff (6) und das Sperrteil (14) nebeneinander angeordnet sein, wobei statt der zwei Gabelarme (8) nur ein Arm vorhanden ist. Außerdem können die je nach Griffgestaltung ein- oder zweifach vorhandenen Armverlängerungen (12) entfallen oder anders gestaltet sein. Die Sekundärsicherung läßt sich dann durch andere geeignete Maßnahmen erreichen.

Abwandlungen sind auch hinsichtlich der Verschleißanzeige (26) möglich, indem zum Beispiel der Signalkopf (27) sich am Kupplungsgehäuse (3), insbesondere der Gehäuseöffnung (5), orientiert.

Zusätzliche Varianten ergeben sich hinsichtlich der Zuordnung von Kupplungsgriff (6) und Sperrteil (14). Die getrennte Anordnung läßt es zu, daß beide Teile auf unterschiedlichen Achsen gelagert sind. Der Kupplungsgriff (6) kann auch mehrteilig sein.

### BEZUGSZEICHENLISTE

- 1: Kugelkopf-Anhängerkupplung
- 2: Kugelkopf
- 3: Kupplungsgehäuse
- 4: Kalotte
- 5: Gehäuseöffnung
- 6: Kupplungsgriff
- 7: Mitnahmeverbindung
- 8: Gabelarm
- 9: Mitnehmer, Druckplatte
- 10: Fenster
- 11: Feder, Blattfeder
- 12: Armverlängerung
- 13: Anschlagfläche
- 14: Sperrteil
- 15: Mitnahmekante
- 16: Spannfeder
- 17: Bügelarm
- 18: Achse
- 19: Druckfläche
- 20: Rastöffnung
- 21: Kupplungsschale
- 22: Achse
- 23: Feder
- 24: Rastnase
- 25: Anlaufkante
- 26: Verschleißanzeige
- 27: Signalkopf
- 28: Sicherungsstift
- 29: Einrastanzeige
- 30: Anlauffläche
- 31: Anschlagkante

## Patentansprüche

1. Kugelkopf-Anhängerkupplung mit einem Kupplungsgriff (6), einem getrennt angeordneten und mit dem Kupplungsgriff (6) in einer Mitnahmeverbindung stehenden Sperrteil (14) sowie mit einer Kupplungsschale (21), dadurch **gekennzeichnet**, daß der Kupplungsgriff (6) und das Sperrteil (14) unabhängig voneinander drehbar gelagert sind und durch eine einseitig wirkende Mitnahmeverbindung (7) gekoppelt sind.

2. Kugelkopf-Anhängerkupplung nach Anspruch 1, dadurch **gekennzeichnet**, daß das Sperrteil (14) von einer Spannfeder (16) in Schließrichtung belastet ist und die Mitnahmeverbindung (7) in Öffnungsrichtung besteht.

3. Kugelkopf-Anhängerkupplung nach Anspruch 1 oder 2, dadurch **gekennzeichnet**, daß der Kupplungsgriff (6) und das Sperrteil (14) auf einer gemeinsamen Achse (18) gelagert sind.

4. Kugelkopf-Anhängerkupplung nach Anspruch 1, 2 oder 3, dadurch **gekennzeichnet**, daß das Sperrteil (14) in oder neben dem Kupplungsgriff (6) angeordnet ist.

5. Kugelkopf-Anhängerkupplung nach Anspruch 1 oder einem der folgenden, dadurch **gekennzeichnet**, daß der Kupplungsgriff (6) einen Mitnehmer (9) aufweist, der mit einer Mitnahmekante (15) am Sperrteil (14) zusammenwirkt.

6. Kugelkopf-Anhängerkupplung nach Anspruch 1 oder einem der folgenden, dadurch **gekennzeichnet**, daß der Kupplungsgriff (6) jenseits der Achse (18) eine Armverlängerung (12) aufweist, die sich zur Kupplungsschale (21) erstreckt und einen Sicherungsanschlag bildet.

7. Kugelkopf-Anhängerkupplung nach Anspruch 6, dadurch **gekennzeichnet**, daß die Armverlängerung (12) mit Abstand oberhalb der Kupplungsschale endet und eine Anschlagfläche (13) mit einer selbsthemmenden Kurvenbahn aufweist.

8. Kugelkopf-Anhängerkupplung nach Anspruch 1 oder einem der folgenden, dadurch **gekennzeichnet**, daß das Sperrteil (14) eine Rastöffnung (20) zur Aufnahme einer Rastnase (24) der Kupplungsschale (21) aufweist.

9. Kugelkopf-Anhängerkupplung nach Anspruch 8, dadurch **gekennzeichnet**, daß die Armverlängerung (12) eine seitliche Anlaufkante (25) aufweist, die mit der Rastnase (24) zusammenwirkt.

10. Kugelkopf-Anhängerkupplung nach Anspruch 1 oder einem der folgenden, dadurch **gekennzeichnet**, daß ein durch das Kupplungsgehäuse (3) steckbarer Sicherungsstift (28) vorgesehen ist, der sich in Schließstellung der Anhängerkupplung (1) hinter dem Sperrteil (14) und der Armverlängerung (12) erstreckt und in Öffnungsstellung von der Armverlängerung (12) blockiert ist.

11. Kugelkopf-Anhängerkupplung nach Anspruch 1 oder einem der folgenden, dadurch **gekennzeichnet**, daß das Sperrteil (14) mit einer Verschleißanzeige (26) verbunden ist.

12. Kugelkopf-Anhängerkupplung nach Anspruch 11, dadurch **gekennzeichnet**, daß die Verschleißanzeige (26) einen am Sperrteil (14) angeordneten Signalkopf (27) aufweist, der am Kupplungsgriff (6) und/oder am Kupplungsgehäuse (3) heraus- oder vorbeiragt.

13. Kugelkopf-Anhängerkupplung nach Anspruch 1 oder einem der folgenden, dadurch **gekennzeichnet**, daß der Kupplungsgriff (6) in Schließstellung durch Eigengewicht und/oder eine Feder (11) an der Gehäuseöffnung (5) anschlägt.

## Claims

1. Ball trailer hitch having a hitch handle (6), a locking part (14) which is separately arranged and is in a driving connection with the hitch handle (6), and a hitch clamp (21), characterized in that the hitch handle (6) and the locking part (14) are rotatably mounted independently of one another and are coupled by a driving connection (7) acting on one side.

2. Ball trailer hitch according to Claim 1, characterized in that the locking part (14) is loaded in the engagement direction by a tension spring (16) and the driving connection (7) exists in the disengagement direction.

3. Ball trailer hitch according to Claim 1 or 2, characterized in that the hitch handle (6) and the locking part (14) are mounted on a common pivot (18).

4. Ball trailer hitch according to Claim 1, 2 or 3, characterized in that the locking part (14) is arranged in or beside the hitch handle (6).

5. Ball trailer hitch according to Claim 1 or one of the subsequent claims, characterized in that the hitch handle (6) has a driver (9) which cooperates with a driving edge (15) on the locking part (14).

6. Ball trailer hitch according to Claim 1 or one of the subsequent claims, characterized in that the hitch handle (6), beyond the pivot (18), has an arm extension (12) which extends to the hitch clamp (21) and forms a safety stop.

7. Ball trailer hitch according to Claim 6, characterized in that the arm extension (12) ends at a distance above the hitch clamp and has a stop face (13) with a self-locking curved path.

8. Ball trailer hitch according to Claim 1 or one of the subsequent claims, characterized in that the locking part (14) has a catch opening (20) for receiving a catch nose (24) of the hitch clamp (21).

9. Ball trailer hitch according to Claim 8, characterized in that the arm extension (12) has a lateral run-on edge (25) which cooperates with the catch nose (24).

10. Ball trailer hitch according to Claim 1 or one of the subsequent claims, characterized in that a securing pin (28) which can be inserted through the hitch housing (3) is provided, the securing pin extending behind the locking part (14) and the arm extension (12) in the engagement position of the trailer hitch (1) and being blocked by the arm extension (12) in the disengagement position.

11. Ball trailer hitch according to Claim 1 or one of the subsequent claims, characterized in that the locking part (14) is connected to a wear indicator (26).

12. Ball trailer hitch according to Claim 11, characterized in that the wear indicator (26) has an indicator head (27) which is arranged on the locking part (14) and projects out of or past the hitch handle (6) and/or the hitch housing (3).

13. Ball trailer hitch according to Claim 1 or one of the subsequent claims, characterized in that the hitch handle (6) strikes against the housing opening (5) in the engagement position owing to its own weight and/or a spring (11).

## Revendications

1. Accouplement de remorque à boule, comportant une poignée (6) d'accouplement, une pièce (14) de blocage qui est montée séparément et qui est en liaison d'entraînement avec la poignée (6) d'accouplement, ainsi qu'une coquille (21) d'accouplement, caractérisé en ce que la poignée (6) d'accouplement et la pièce (14) de blocage sont montées tournantes indépendamment l'une de l'autre et sont couplées par une liaison (7) d'entraînement agissant d'un seul côté.

2. Accouplement de remorque à boule suivant la revendication 1, caractérisé en ce que la pièce (14) de blocage est soumise à l'action d'un ressort (16) tendeur dans la direction de fermeture et en ce que la liaison (7) d'entraînement existe dans la direction d'ouverture.

3. Accouplement de remorque à boule suivant la revendication 1 ou 2, caractérisé en ce que la poignée (6) d'accouplement et la pièce (14) de blocage sont montées sur un axe (18) commun.

4. Accouplement de remorque à boule suivant la revendication 1, 2 ou 3, caractérisé en ce que la pièce (14) de blocage est montée dans la poignée (6) d'accouplement ou à côté de la poignée (6) d'accouplement.

5. Accouplement de remorque à boule suivant la revendication 1 ou l'une des suivantes, caractérisé en ce que la poignée (6) d'accouplement comporte un toc (9) d'entraînement, qui coopère avec un bord (15) d'entraînement de la pièce (14) de blocage.

6. Accouplement de remorque à boule suivant la revendication 1 ou l'une des suivantes, caractérisé en ce que la poignée (6) d'accouplement comporte, au-delà de l'axe (18), un prolongement (12) de bras, qui s'étend en direction de la coquille (21) d'accouplement et qui forme une butée de blocage.

7. Accouplement de remorque à boule suivant la revendication 6, caractérisé en ce que le prolongement (12) de bras se termine à distance au-dessus de la coquille (21) d'accouplement et comporte une surface (13) de butée ayant une incurvation autoblocante.

8. Accouplement de remorque à boule suivant la revendication 1 ou l'une des suivantes, caractérisé en ce que la pièce (14) de blocage comporte une ouverture (20) d'encliquetage pour recevoir un nez (24) d'encliquetage de la coquille (21) d'accouplement.

9. Accouplement de remorque à boule suivant la revendication 8, caractérisé en ce que le prolongement (12) de bras comporte un bord (25) latéral d'attaque, qui coopère avec le nez (24) d'encliquetage.

10. Accouplement de remorque à boule suivant la revendication 1 ou l'une des suivantes, caractérisé en ce qu'il est prévu une broche (28) de blocage qui peut être enfilée dans le boîtier (3) d'accouplement, qui, en position de fermeture de l'accouplement (1) de remorque, s'étend derrière la pièce (14) de blocage et le prolongement (12) de bras et qui, en position d'ouverture, est bloquée par le prolongement (12) de bras.

11. Accouplement de remorque à boule suivant la revendication 1 ou l'une des suivantes, caractérisé en ce que la pièce (14) de blocage est reliée à un dispositif (26) d'indication d'usure.

12. Accouplement de remorque à boule suivant la revendication 11, caractérisé en ce que le dispositif (26) d'indication d'usure comporte une tête (27) de signalisation, qui est montée sur la pièce (14) de blocage et qui sort de la poignée (6) d'accouplement et/ou du boîtier (3) d'accouplement ou fait saillie devant ces pièces.

13. Accouplement de remorque à boule suivant la revendication 1 ou l'une des suivantes, caractérisé en ce que, en position de fermeture, la poignée (6) d'accouplement bute sur l'ouverture (5) du boîtier en raison de son propre poids et/ou en raison d'un ressort (11).
